# EUROPÄISCHE PATENTANMELDUNG

(11) **EP 3 672 150 A1**
(43) Veröffentlichungstag der Anmeldung: **24.06.2020**
(21) Anmeldenummer: 19215887.1
(22) Anmeldetag: 13.12.2019
(51) Int. Cl.: H04L 12/10, H04B 3/54

(54) **STECKERAUFNAHME ZUR GLEICHZEITIGEN ÜBERTRAGUNG VON DATEN UND GLEICHSPANNUNG**

(30) Priorität: 18.12.2018 DE 102018222071
(71) Anmelder: ZF Friedrichshafen AG, 88046 Friedrichshafen (DE)
(72) Erfinder: Vieweger, Wolfgang, 88085 Langenargen (DE); Schreiner, Marc, 88069 Tettnang (DE)
(74) Vertreter: ZF Friedrichshafen AG

(57) **Zusammenfassung**

Steckeraufnahme (1) zur gleichzeitigen Übertragung von Daten und Gleichspannung, die ausgebildet ist einen korrespondierenden Stecker aufzunehmen, die einen Dateneingangskontakt (11), einen Gleichspannungseingangskontakt (12), ein Kopplungsfilter (13), und einen ersten Ausgangskontakt (14) umfasst, wobei der erste Ausgangskontakt mit dem ersten Dateneingangskontakt unmittelbar und mit dem ersten Gleichspannungseingangskontakt über das erste Kopplungsfilter elektrisch verbunden sind.

## Beschreibung

Die Erfindung betrifft eine Steckeraufnahme zur gleichzeitigen Übertragung von Daten und Gleichspannung, ein Modul zur gleichzeitigen Übertragung von Daten und Gleichspannung, ein Kommunikationssystem zur gleichzeitigen Übertragung von Daten und Gleichspannung und ein Kraftfahrzeug.

Steckeraufnahmen zur gleichzeitigen Übertragung von Daten und Gleichspannung sind prinzipiell aus dem Stand der Technik bekannt. Die Druckschrift DE 10 2013 012 368 A1 zeigt ein Kraftfahrzeug-Bordnetz sowie ein Verfahren zur Übertragung von Datensignalen in einem Kraftfahrzeug-Bordnetz, wobei Daten, die von Verbrauchern bereitgestellt werden, über Versorgungsleitungen übermittelt werden.

Es ist daher eine Aufgabe der vorliegenden Erfindung, eine verbesserte Steckeraufnahme zur gleichzeitigen Übertragung von Daten und Gleichspannung, ein verbessertes Modul zur gleichzeitigen Übertragung von Daten und Gleichspannung, ein verbessertes Kommunikationssystem zur gleichzeitigen Übertragung von Daten und Gleichspannung und ein verbessertes Kraftfahrzeug bereitzustellen.

Diese Aufgabe wird gelöst durch eine Steckeraufnahme zur gleichzeitigen Übertragung von Daten und Gleichspannung, die ausgebildet, ist einen korrespondierenden Stecker aufzunehmen. Die Steckeraufnahme umfasst einen ersten Dateneingangskontakt, einen ersten Gleichspannungseingangskontakt, ein erstes Kopplungsfilter, und einen ersten Ausgangskontakt. Dabei ist der erste Ausgangskontakt mit dem ersten Dateneingangskontakt unmittelbar und mit dem ersten Gleichspannungseingangskontakt über das erste Kopplungsfilter elektrisch verbunden.

Die gleichzeitige Übertragung von Daten und Gleichspannung bedeutet eine Übertragung von Daten und elektrischer Energie auf einem gemeinsamen elektrischen Leiter. Die Daten, das heißt Informationen, werden dabei in Form eines elektrischen Signals übertragen. Das elektrische Signal, das auch Datensignal genannt wird, kann dabei ein analoges Signal oder ein digitales Signal sein. Das Datensignal kann dabei beispielsweise ein Spannungssignal oder ein Stromsignal sein. Dabei wird das Spannungssignal oder das Stromsignal durch eine Modulation einer elektrischen Spannung oder eines elektrischen Stroms übertragen. Beispielsweise ist das Datensignal ein durch einen Informationsstrom moduliertes Wechselspannungssignal einer Trägerfrequenz fc. Dabei nimmt das Datensignal üblicherweise einen vorbestimmten Frequenzbereich, beispielsweise den Frequenzbereich f_{C}-f_{B} bis f_{C}+f_{B} mit einer Bandbreite von 2·f_{B}, in einem elektromagnetischen Spektrum ein. Je größer die Bandbreite des Datensignals ist, umso höher sind die Anforderungen an eine Kopplung zwischen der Gleichspannung und dem Datensignal.

Elektrische Energie wird dabei in Form von Gleichspannung von einer Gleichspannungsquelle zu einem Verbraucher übertragen. Eine Gleichspannung ist eine elektrische Spannung, deren Augenblickswert sich über einen längeren Betrachtungszeitraum nicht ändert. Sie hat zu jedem Zeitpunkt dasselbe Vorzeichen und denselben Betrag. Die Übertragung auf einem gemeinsamen elektrischen Leiter erfolgt, indem das Datensignal und die Gleichspannung einander überlagert werden. Somit können sowohl die Daten als auch die elektrische Energie auf einem einzigen elektrischen Leiter, beispielsweise auf einer einzigen Ader in einem Kabel, oder auf einer einzigen Stromschiene, gleichzeitig übertragen werden.

Die Steckeraufnahme ist dabei ausgebildet, einen korrespondierenden Stecker aufzunehmen. Dazu weist die Steckeraufnahme beispielsweise eine zumindest abschnittsweise hohle Gestalt auf, in die ein korrespondierender Stecker eingesteckt bzw. eingeführt werden kann. Dabei werden der Stecker und die Steckeraufnahme durch Formschluss passend ausgerichtet und fixiert. Zusätzlich kann die Steckeraufnahme durch Rastelemente, beispielsweise eine Rastnase, Federelemente, beispielsweise einen Kontaktfuß, oder Schraubelemente kraftschlüssig fixiert werden. Wenn der korrespondierende Stecker in die Steckeraufnahme gesteckt ist, wird mindestens eine elektrische Verbindung geschlossen, das heißt leitend gemacht.

Der erste Dateneingangskontakt ist beispielsweise ein Pin, der auch Stift oder Kontaktstift genannt werden kann, und der in eine Platine gesteckt werden kann. Dabei wird der erste Dateneingangskontakt mit einer Verarbeitungsvorrichtung elektrisch verbunden, beispielsweise mit einer Schaltung auf der Platine, die ausgebildet, ist Daten zu empfangen, zu verarbeiten, und/oder zu senden. Dabei liegt an dem ersten Dateneingangskontakt das reine Datensignal ohne die Gleichspannung an.

Der erste Gleichspannungseingangskontakt ist beispielsweise ein Pin, der in eine Platine gesteckt werden kann. Beispielsweise können der erste Gleichspannungseingangskontakt und der erste Dateneingangskontakt gemeinsam gleichzeitig in die Platine gesteckt werden. Dabei wird der erste Gleichspannungseingangskontakt mit einer Gleichspannungsquelle verbunden. Beispielsweise in einem Fahrzeug kann der erste Gleichspannungseingangskontakt mit einer Klemme 15 elektrisch verbunden werden. Dabei liegt an dem ersten Gleichspannungseingangskontakt die reine Gleichspannung ohne ein Datensignal an.

Das erste Kopplungsfilter ist eine elektrische Schaltung, die das Gleichspannungssignal in Abhängigkeit von der Frequenz in Amplitude und Phasenlage beeinflusst. Insbesondere glättet das erste Kopplungsfilter dabei die Gleichspannung. Zusätzlich kann das erste Kopplungsfilter den ersten Gleichspannungseingangskontakt und den Ausgangskontakt galvanisch trennen.

Der erste Ausgangskontakt umfasst beispielsweise eine Kabelklemme, in welche ein Kabel eingeklemmt oder eingeschraubt werden kann. Wieder beispielsweise umfasst der erste Ausgangskontakt eine Kontaktöffnung, welche ausgebildet ist, einen korrespondierenden Pin eines Steckers aufzunehmen. Wieder beispielsweise umfasst der erste Ausgangskontakt einen Pin, welcher ausgebildet ist, in eine korrespondierende Kontaktöffnung eines Steckers einzugreifen. Zusätzlich kann der erste Ausgangskontakt einen Leiter umfassen, beispielsweise einen Stift. Indem der erste Ausgangskontakt ausgebildet ist, mindestens einen Teil eines Steckers aufzunehmen, ist die Steckeraufnahme ausgebildet, den Stecker aufzunehmen. In anderen Worten kontaktiert der erste Ausgangskontakt einen Teil eines Steckers, beispielsweise eine Kontaktöffnung des Steckers oder einen Pin des Steckers, wenn der Stecker in der Steckeraufnahme steckt.

Dabei ist der erste Ausgangskontakt mit dem ersten Dateneingangskontakt unmittelbar elektrisch verbunden. Das heißt, der erste Ausgangskontakt und der erste Dateneingangskontakt sind ohne Zwischenschaltung weiterer elektrischer Bauteile miteinander verbunden. Dabei sind der erste Ausgangskontakt und der erste Dateneingangskontakt beispielsweise einstückig aus einem Draht gefertigt. Wieder beispielsweise teilen der erste Ausgangskontakt und der erste Dateneingangskontakt einen gemeinsamen Leiter. Wieder beispielsweise sind der erste Ausgangskontakt und der erste Dateneingangskontakt aneinander gelötet. Beispielsweise beträgt die gesamte gemeinsame Länge von erstem Ausgangskontakt und Dateneingangskontakt unter zwei Zentimetern.

Dabei ist der erste Ausgangskontakt mit dem ersten Gleichspannungseingangskontakt über das erste Kopplungsfilter elektrisch verbunden. Das bedeutet, dass der erste Ausgangskontakt und das erste Kopplungsfilter unmittelbar elektrisch verbunden sind, und dass der erste Gleichspannungseingangskontakt und das erste Kopplungsfilter unmittelbar elektrisch verbunden sind. Dabei ist der erste Ausgangskontakt mit einem Eingang und der erste Gleichspannungseingangskontakt mit einem Ausgang des ersten Kopplungsfilters elektrisch verbunden. Indem das erste Kopplungsfilter mit dem ersten Gleichspannungseingangskontakt verbunden ist, wird das ungefilterte und ungestörte Datensignal mit der gefilterten Gleichspannung überlagert.

Indem das erste Kopplungsfilter unmittelbar mit dem ersten Ausgangskontakt elektrisch verbunden ist, kann die geglättete Gleichspannung dabei dem Datensignal überlagert werden, ohne dass die Gleichspannung durch Störungen beeinflusst werden kann.

Der erste Dateneingangskontakt, der erste Gleichspannungseingangskontakt und der erste Ausgangskontakt weisen jeweils eine Länge, die in etwa einer Ausdehnung der Steckeraufnahme entspricht, beispielsweise zwischen halb so lang und doppelt so lang wie die Steckeraufnahme.

Dadurch, dass die Steckeraufnahme einen ersten Dateneingangskontakt, einen ersten Gleichspannungseingangskontakt, ein erstes Kopplungsfilter, und einen ersten Ausgangskontakt umfasst, kann das erste Kopplungsfilter elektrisch gut von Störeinflüssen der Platine abgeschirmt werden. Außerdem kann dadurch die elektrische Verbindung zwischen Gleichspannungsquelle, erstem Kopplungsfilter und erstem Ausgangskontakt besonders kurz und geometrisch vorteilhaft ausfallen.

Die Steckeraufnahme kann dadurch weitergebildet werden, dass das erste Kopplungsfilter innerhalb der Steckeraufnahme gekapselt ist.

Dabei ist das erste Kopplungsfilter von einer Struktur umgeben, die außer dem Kopplungsfilter lediglich Teile des ersten Ausgangskontakts und des ersten Gleichspannungseingangskontakts umfasst.

Beispielsweise kann das erste Kopplungsfilter in einer Kammer der Steckeraufnahme gekapselt sein. Wenn die Steckeraufnahme aus Kunststoff gefertigt ist, kann beispielsweise die Kammer ein integraler Bestandteil der Steckeraufnahme sein. Wieder beispielsweise kann das erste Kopplungsfilter in einem eigenen Gehäuse innerhalb der Steckeraufnahme gekapselt sein.

Dabei kann die Struktur, welche das erste Kopplungsfilter kapselt, Aussparungen für einen Teil des ersten Ausgangskontakts und/oder einen Teil des ersten Gleichspannungseingangskontakts aufweisen. Wenn die Struktur im Spritzgussverfahren hergestellt wird, kann beispielsweise der erste Ausgangskontakt und/oder der erste Gleichspannungseingangskontakt eingegossen werden.

Dadurch, dass das erste Kopplungsfilter in der Steckeraufnahme gekapselt ist, kann das erste Kopplungsfilter besonders gut von Störeinflüssen abgeschirmt und somit das Datensignal besonders gut übertragen werden.

Die Steckeraufnahme kann dadurch weitergebildet werden, dass der erste Gleichspannungseingangskontakt und der erste Dateneingangskontakt parallel zueinander angeordnet sind, wobei das erste Kopplungsfilter in einem Bereich zwischen dem ersten Gleichspannungseingangskontakt und dem ersten Dateneingangskontakt angeordnet ist.

Wenn der erste Gleichspannungseingangskontakt und der erste Dateneingangskontakt parallel zueinander angeordnet sind, kann die Steckeraufnahme besonders einfach auf einer Platine befestigt, beispielsweise in die Platine gesteckt, werden. Wenn dabei das erste Kopplungsfilter zwischen dem ersten Gleichspannungseingangskontakt und dem ersten Dateneingangskontakt angeordnet ist, können der erste Gleichspannungseingangskontakt und der erste Dateneingangskontakt besonders gut voneinander getrennt angeordnet werden, wobei die Steckeraufnahme zugleich kompakt ausgebildet ist.

Die Steckeraufnahme dadurch weitergebildet werden, dass der erste Dateneingangskontakt und der erste Ausgangskontakt zueinander in einem rechten Winkel angeordnet sind, wobei das erste Kopplungsfilter in einem Bereich des Winkels mit dem ersten Ausgangskontakt elektrisch verbunden ist.

Ein rechter Winkel ist dabei ein Winkel von etwa 90 Grad, beispielsweise 70 bis 110 Grad, zum Beispiel 85 bis 95 Grad. Dabei können der erste Dateneingangskontakt und der erste Ausgangskontakt beispielsweise Stoß auf Stoß in einem solchen Winkel miteinander verbunden sein. Wieder beispielsweise können der erste Dateneingangskontakt und der erste Ausgangskontakt zueinander im Wesentlichen diesen Winkel einnehmen, wobei der erste Dateneingangskontakt und der erste Ausgangskontakt einen Bogen in einem Übergangsbereich bilden. Insbesondere kann der erste Ausgangskontakt an dem Ende, an welchem er mit dem ersten Dateneingangskontakt verbunden ist, in einem Bogen um 90 Grad auslaufen. In anderen Worten weist der erste Ausgangskontakt an dem Ende eine Krümmung um 90 Grad auf, wo der erste Ausgangskontakt mit dem ersten Dateneingangskontakt verbunden, beispielsweise verlötet, ist. Bei einer einstückigen Ausführungsform von erstem Dateneingangskontakt und erstem Ausgangskontakt weist der erste Ausgangskontakt an dem Ende eine Krümmung um 90 Grad auf, wo der erste Ausgangskontakt in den ersten Dateneingangskontakt übergeht. Dabei weist die Krümmung einen Radius von beispielsweise zwischen 0% und 30% der Länge des Dateneingangskontakts auf, zum Beispiel zwischen 5% und 20%, auf.

Dabei sind beispielsweise der Dateneingangskontakt, der erste Gleichspannungseingangskontakt und der erste Ausgangskontakt in einer Ebene angeordnet. Beispielsweise weist dabei der Ausgangskontakt von dem ersten Gleichspannungseingangskontakt weg.

Das erste Kopplungsfilter ist dabei in einem Bereich des Winkels mit dem ersten Ausgangskontakt elektrisch verbunden, das heißt, in einem Bereich der elektrischen Verbindung des Dateneingangskontakts mit dem ersten Ausgangskontakt. In einem Bereich des Winkels bedeutet dabei beispielsweise an einem Knick zwischen erstem Dateneingangskontakt und erstem Ausgangskontakt, oder in einer Lötstelle zwischen erstem Dateneingangskontakt und erstem Ausgangskontakt, oder in einem Bereich der oben beschriebenen Krümmung des ersten Ausgangskontakt. Wieder beispielsweise bedeutet in einem Bereich des Winkels in einer kurzen Distanz zu dem Knick oder der Lötstelle, beispielsweise zwischen 0% und 20% der Länge des ersten Ausgangskontakts, zum Beispiel zwischen 0% und 5% der Länge des ersten Ausgangskontakts.

Dadurch, dass das erste Kopplungsfilter in einem Bereich eines Winkels von etwa 90 Grad mit dem ersten Ausgangskontakt elektrisch verbunden ist, sind die Hochfrequenz-Eigenschaften der Steckeraufnahme besonders günstig. Außerdem kann dadurch das erste Kopplungsfilter besonders einfach räumlich angeordnet werden. Dadurch, dass der erste Dateneingangskontakt, der erste Gleichspannungseingangskontakt und der erste Ausgangskontakt in einer Ebene angeordnet sind, können besonders einfach weitere Kontakte in einer Steckeraufnahme integriert werden.

Die Steckeraufnahme kann dadurch weitergebildet werden, dass die Steckeraufnahme einen zweiten Ausgangskontakt umfasst, wobei der erste Ausgangskontakt und der zweite Ausgangskontakt ausgebildet sind, gemeinsam ein zweipoliges Stecker-Element aufzunehmen.

Beispielsweise kann der zweite Ausgangskontakt einen Massekontakt umfassen, oder der zweite Ausgangskontakt kann ein zusätzliches Datensignal übertragen. Das zweipolige Stecker-Element, das auch zweiadriges Stecker-Element genannt werden kann, kann beispielsweise ein Klinkenstecker, ein zweipoliger Kaltgeräte-Stecker, oder ein zweipoliger DIN-Stecker sein.

Der zweite Ausgangskontakt kann alternativ ebenfalls gleichzeitig Daten und Gleichspannung übertragen. Dabei weist die Steckeraufnahme beispielsweise einen zweiten Dateneingangskontakt auf. Die Steckeraufnahme kann außerdem einen zweiten Gleichspannungseingangskontakt aufweisen, oder Gleichspannung bei dem ersten Gleichspannungseingangskontakt in der Steckeraufnahme abzweigen. Dabei kann die Steckeraufnahme auch ein mit dem zweiten Ausgangskontakt elektrisch verbundenes zweites Kopplungsfilter aufweisen. Dabei können das erste und das zweite Kopplungsfilter jedes für sich wie oben beschrieben gekapselt sein.

Indem die Steckeraufnahme einen zweiten Ausgangskontakt umfasst, kann die Steckeraufnahme zusätzliche Funktionen erfüllen. Dadurch, dass der erste Ausgangskontakt und der zweite Ausgangskontakt ausgebildet sind, gemeinsam ein zweipoliges Stecker-Element aufzunehmen, kann dabei die Steckeraufnahme besonders kompakt ausgelegt werden.

Die Steckeraufnahme kann dadurch weitergebildet werden, dass der erste Ausgangskontakt und der zweite Ausgangskontakt ausgebildet sind, ein Koaxialstecker-Element aufzunehmen.

Der erste Ausgangskontakt und der zweite Ausgangskontakt sind beispielsweise ausgebildet, einen FAKRA-Stecker beziehungsweise einen SMBA-Stecker aufzunehmen. Alternativ sind der erste Ausgangskontakt und der zweite Ausgangskontakt ausgebildet, ein anderes Koaxialstecker-Element aufzunehmen, beispielsweise einen RCA-Stecker, einen Cinch-Stecker, einen Belling-Lee-Steckverbinder, einen BNC-Steckverbinder, einen MCX-Stecker, oder einen SMA-Stecker.

Dadurch, dass der erste Ausgangskontakt und der zweite Ausgangskontakt ausgebildet sind, ein Koaxialstecker-Element aufzunehmen, kann eine besonders störsichere Übertragung von Daten und Gleichspannung erreicht werden. Außerdem können dadurch die Steckeraufnahme, ein korrespondierender Stecker und entsprechende Kabel besonders kompakt ausgelegt werden.

Die Steckeraufnahme kann dadurch weitergebildet werden, dass das erste Kopplungsfilter eine Induktivität umfasst. Durch die Induktivität wird beispielsweise die Gleichspannung geglättet. In einem anderen Beispiel weist das erste Kopplungsfilter mehrere Induktivitäten auf. In einem weiteren Beispiel weist das erste Kopplungsfilter Induktivitäten und Kapazitäten auf.

Dadurch, dass das erste Kopplungsfilter eine Induktivität umfasst, können beispielsweise Störungen in der Gleichspannung durch Schaltvorgänge besonders gut und günstig reduziert werden.

Die eingangs genannte Aufgabe wird ebenfalls gelöst durch ein Modul zur gleichzeitigen Übertragung von Daten und Gleichspannung, umfassend eine Platine mit einer Gleichspannungsquelle und einer Datenquelle, sowie eine Steckeraufnahme nach einer der oben beschriebenen Ausführungsformen, die mit der Platine verbunden ist. Dabei ist die Gleichspannungsquelle elektrisch unmittelbar mit dem ersten Gleichspannungseingangskontakt der Steckeraufnahme verbunden. Außerdem ist dabei die Datenquelle elektrisch unmittelbar mit dem ersten Dateneingangskontakt verbunden.

Die Gleichspannungsquelle bezieht beispielsweise Energie von einer Batterie, einer Lichtmaschine oder von einem Gleichrichter. Die Gleichspannungsquelle stellt die annährend konstante Spannung bereit, beispielsweise +12 V ± 1,5 V.

Die Datenquelle umfasst beispielsweise einen Prozessor und/oder Schaltungen, die ausgebildet sind, Fahrzeugfunktionen zu steuern. Wieder beispielsweise umfasst die Datenquelle eine Datenschnittstelle, beispielsweise eine Mobilfunkschnittstelle. Dabei ist die Datenquelle ausgebildet, Daten zu senden, Daten zu empfangen, oder Daten zu senden und zu empfangen.

Die Gleichspannungsquelle ist unmittelbar mit dem ersten Gleichspannungseingangskontakt der Steckeraufnahme verbunden, indem beispielsweise der erste Gleichspannungseingangskontakt in einen Federkontakt der Gleichspannungsquelle gesteckt ist, oder indem beispielsweise die Gleichspannungsquelle an den ersten Gleichspannungseingangskontakt geklemmt wird.

Die Datenquelle kann auf dieselbe Weise unmittelbar elektrisch mit dem ersten Dateneingangskontakt verbunden sein wie die Gleichspannungsquelle mit dem ersten Gleichspannungseingangskontakt. Alternativ kann die Datenquelle anderweitig unmittelbar elektrisch mit dem ersten Dateneingangskontakt verbunden sein.

Dadurch, dass die Gleichspannungsquelle unmittelbar mit dem ersten Gleichspannungseingangskontakt verbunden ist, kann das Datensignal weitgehend störungsfrei mit der Gleichspannung überlagert werden, und gleichzeitig Bauraum in dem Modul eingespart werden. Ebenso kann dadurch, dass die Datenquelle unmittelbar mit dem ersten Dateneingangskontakt verbunden ist, das Datensignal weitgehend störungsfrei an den Ausgangskontakt geleitet werden und gleichzeitig Bauraum eingespart werden.

Das Modul kann dadurch weitergebildet werden, dass die Steckeraufnahme unlösbar mit der Platine verbunden ist.

Dabei bedeutet unlösbar, dass die Steckeraufnahme nicht zerstörungsfrei von der Platine gelöst werden kann. Beispielsweise kann die Steckeraufnahme unlösbar mit der Platine verbunden sein, indem der erste Gleichspannungseingangskontakt mit einem Kontakt der Gleichspannungsquelle unlösbar verbunden ist. Alternativ oder zusätzlich kann der erste Dateneingangskontakt mit einem Kontakt der Datenquelle unlösbar verbunden sein. Alternativ oder zusätzlich kann ein Gehäuse der Steckeraufnahme unlösbar mit der Platine verbunden sein.

Dabei kann beispielsweise die Steckeraufnahme ein integraler Bestandteil der Platine sein, das heißt, die Steckeraufnahme und die Platine können gemeinsame Bauteile teilen. Wieder beispielsweise kann die Steckeraufnahme mit der Platine verklebt sein.

Wenn die Steckeraufnahme unlösbar mit der Platine verbunden ist, kann die Steckeraufnahme besonders robust ausgebildet sein und es kann Bauraum eingespart werden.

Insbesondere kann das Modul dabei dadurch weitergebildet werden, dass die Steckeraufnahme mit der Platine verlötet ist.

Beispielsweise kann die Steckeraufnahme unlösbar mit der Platine verbunden sein, indem der erste Gleichspannungseingangskontakt mit einem Kontakt der Gleichspannungsquelle verlötet ist. Alternativ oder zusätzlich kann der erste Dateneingangskontakt mit einem Kontakt der Datenquelle verlötet sein.

Dadurch können Übergangswiderstände zwischen den Kontakten der Steckeraufnahme und den Kontakten der Platine besonders gering ausfallen, und es kann weiterer Bauraum eingespart werden.

Die eingangs genannte Aufgabe wird ebenfalls gelöst durch ein Kommunikationssystem zur gleichzeitigen Übertragung von Daten und Gleichspannung, umfassend ein Modul nach einer der oben beschriebenen Ausführungsformen, ein Steuergerät, sowie ein Verbindungskabel, das ausgebildet ist, eine Steckeraufnahme des Moduls und das Steuergerät elektrisch miteinander zu verbinden. Dabei ist das Steuergerät ausgebildet, durch das Verbindungskabel mit Gleichspannung versorgt zu werden, und gleichzeitig über das Verbindungskabel mit dem Modul Daten auszutauschen.

Dadurch kann das Kommunikationssystem besonders hohe Anforderungen an eine Übertragung von Daten und Gleichspannung, beispielsweise hohe elektrische Leistungen und eine hohe spektrale Bandbreite der Datenübertragung, beispielsweise mehrere GHz Bandbreite, erreicht werden.

Die eingangs genannte Aufgabe wird ebenfalls gelöst durch ein Kraftfahrzeug mit einem Kommunikationssystem nach einer der zuvor beschriebenen Ausführungsformen.

Bezüglich der Vorteile, Ausführungsvarianten und Ausführungsdetails des Moduls, des Kommunikationssystems und des Kraftfahrzeugs wird zusätzlich auf vorangegangene Beschreibung zu den entsprechenden Merkmalen und Weiterbildungen der Steckeraufnahme verwiesen.

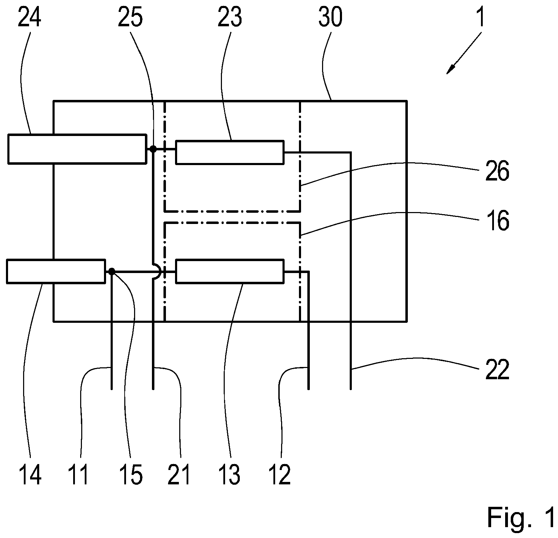

Ausführungsformen der Erfindung werden nun beispielhaft anhand der beiliegen-den Figuren beschrieben, in denen
- Fig. 1: eine schematische Darstellung einer Steckeraufnahme gemäß zumindest einer Ausführungsform
zeigt.

Fig. 1 zeigt eine schematische Darstellung einer Steckeraufnahme 1 gemäß zumindest einer Ausführungsform.

Die Steckeraufnahme 1 umfasst einen ersten Dateneingangskontakt 11, einen ersten Gleichspannungseingangskontakt 12, ein erstes Kopplungsfilter 13 und einen ersten Ausgangskontakt 14. Dabei sind der erste Dateneingangskontakt 11 und der erste Ausgangskontakt 14 in einem rechten Winkel 15 miteinander unmittelbar elektrisch verbunden. Das erste Kopplungsfilter 13 ist ebenfalls in einem Bereich des Winkels 15 unmittelbar elektrisch mit dem ersten Ausgangskontakt 14 verbunden. Das erste Kopplungsfilter 13 ist an einem weiteren Ende mit dem ersten Gleichspannungseingangskontakt 12 unmittelbar elektrisch verbunden.

Die Steckeraufnahme 1 umfasst einen zweiten Dateneingangskontakt 21, einen zweiten Gleichspannungseingangskontakt 22, ein zweites Kopplungsfilter 23 und einen zweiten Ausgangskontakt 24. Dabei sind der zweite Dateneingangskontakt 21 und der zweite Ausgangskontakt 24 in einem rechten Winkel 25 miteinander unmittelbar elektrisch verbunden. Das zweite Kopplungsfilter 23 ist ebenfalls in einem Bereich des Winkels 25 unmittelbar elektrisch mit dem zweiten Ausgangskontakt 24 verbunden. Das zweite Kopplungsfilter 23 ist an einem weiteren Ende mit dem zweiten Gleichspannungseingangskontakt 22 unmittelbar elektrisch verbunden

Ferner weist die Steckeraufnahme 1 ein Gehäuse 30 auf, das alle Komponenten einhaust und Aussparungen für die ersten und zweiten Dateneingangskontakte 11 und 21, die ersten und zweiten Gleichspannungseingangskontakte 12 und 22, und die ersten und zweiten Ausgangskontakte 14 und 24 aufweist.

Das erste Kopplungsfilter 13 ist dabei innerhalb der Steckeraufnahme 1 gekapselt. Dazu umfasst das Gehäuse 30 eine erste Kammer 16. Die erste Kammer 16 umfasst Aussparungen, die auch Durchbrüche genannt werden können, für einen Teil des ersten Kopplungsfilters 13, der mit dem ersten Gleichspannungseingangskontakt 12 elektrisch verbunden wird, und für einen Teil des ersten Kopplungsfilters 13, der mit dem ersten Ausgangskontakt 14 elektrisch verbunden wird.

Analog ist das zweite Kopplungsfilter 23 dabei innerhalb der Steckeraufnahme 1 gekapselt. Dazu umfasst das Gehäuse 30 eine zweite Kammer 26. Die zweite Kammer 26 umfasst Aussparungen, die auch Durchbrüche genannt werden können, für einen Teil des zweiten Kopplungsfilters 23, der mit dem zweiten Gleichspannungseingangskontakt 22 elektrisch verbunden wird, und für einen Teil des zweiten Kopplungsfilters 23, der mit dem zweiten Ausgangskontakt 24 elektrisch verbunden wird.

Dabei sind der erste Gleichspannungseingangskontakt 12 und der erste Dateneingangskontakt 11 parallel zueinander angeordnet. Das erste Kopplungsfilter 13 in einem Bereich zwischen dem ersten Gleichspannungseingangskontakt 12 und dem ersten Dateneingangskontakt 11 angeordnet. Analog sind der zweite Gleichspannungseingangskontakt 22 und der zweite Dateneingangskontakt 21 parallel zueinander angeordnet, und ist das zweite Kopplungsfilter 23 in einem Bereich zwischen dem zweiten Gleichspannungseingangskontakt 22 und dem zweiten Dateneingangskontakt 21 angeordnet.

Weiter ist Fig. 1 zu entnehmen, dass der erste Ausgangskontakt 14 und der zweite Ausgangskontakt 24 ausgebildet sind, gemeinsam ein zweipoliges Stecker-Element aufzunehmen. Beispielsweise können der erste Ausgangskontakt 14 und der zweite Ausgangskontakt 24 einen Kaltgeräte-Stecker aufnehmen.

### Bezugszeichen

- 1: Steckeraufnahme
- 11: erster Dateneingangskontakt
- 12: erster Gleichspannungseingangskontakt
- 13: erstes Kopplungsfilter
- 14: erster Ausgangskontakt
- 15: Winkel
- 16: erste Kammer
- 21: zweiter Dateneingangskontakt
- 22: zweiter Gleichspannungseingangskontakt
- 23: zweites Kopplungsfilter
- 24: zweiter Ausgangskontakt
- 25: Winkel
- 26: zweite Kammer
- 30: Gehäuse

## Patentansprüche

1. Steckeraufnahme (1) zur gleichzeitigen Übertragung von Daten und Gleichspannung, die ausgebildet ist einen korrespondierenden Stecker aufzunehmen, umfassend:
einen ersten Dateneingangskontakt (11),
einen ersten Gleichspannungseingangskontakt (12),
ein erstes Kopplungsfilter (13), und
einen ersten Ausgangskontakt (14),
wobei der erste Ausgangskontakt mit dem ersten Dateneingangskontakt unmittelbar und mit dem ersten Gleichspannungseingangskontakt über das erste Kopplungsfilter elektrisch verbunden ist.

2. Steckeraufnahme (1) nach dem vorhergehenden Anspruch 1, wobei das erste Kopplungsfilter (13) innerhalb der Steckeraufnahme gekapselt ist.

3. Steckeraufnahme (1) nach einem der vorhergehenden Ansprüche, wobei der erste Gleichspannungseingangskontakt (12) und der erste Dateneingangskontakt (11) parallel zueinander angeordnet sind, und wobei das erste Kopplungsfilter (13) in einem Bereich zwischen dem ersten Gleichspannungseingangskontakt (12) und dem ersten Dateneingangskontakt (11) angeordnet ist.

4. Steckeraufnahme (1) nach einem der vorhergehenden Ansprüche, wobei der erste Dateneingangskontakt (11) und der erste Ausgangskontakt (14) zueinander in einem rechten Winkel (15) angeordnet sind, und wobei das erste Kopplungsfilter (13) in einem Bereich des Winkels (15) mit dem ersten Ausgangskontakt (14) elektrisch verbunden ist.

5. Steckeraufnahme (1) nach einem der vorhergehenden Ansprüche, weiter umfassend einen zweiten Ausgangskontakt (24), wobei der erste Ausgangskontakt (14) und der zweite Ausgangskontakt (24) ausgebildet sind, gemeinsam ein zweipoliges Stecker-Element aufzunehmen.

6. Steckeraufnahme (1) nach dem vorhergehenden Anspruch 5, wobei der erste Ausgangskontakt (14) und der zweite Ausgangskontakt (24) ausgebildet sind, ein Koaxialstecker-Element aufzunehmen.

7. Steckeraufnahme (1) nach einem der vorhergehenden Ansprüche, wobei das erste Kopplungsfilter (13) eine Induktivität umfasst.

8. Modul zur gleichzeitigen Übertragung von Daten und Gleichspannung, umfassend eine Platine mit einer Gleichspannungsquelle und einer Datenquelle,
eine Steckeraufnahme (1) nach einem der vorhergehenden Ansprüche,
wobei die Steckeraufnahme (1) mit der Platine verbunden ist,
wobei die Gleichspannungsquelle elektrisch unmittelbar mit dem ersten Gleichspannungseingangskontakt (12) der Steckeraufnahme (1) verbunden ist, und
wobei die Datenquelle elektrisch unmittelbar mit dem ersten Dateneingangskontakt (11) verbunden ist.

9. Modul nach dem vorhergehenden Anspruch 8, wobei die Steckeraufnahme (1) unlösbar mit der Platine verbunden ist.

10. Modul nach dem vorhergehenden Anspruch 9, wobei die Steckeraufnahme (1) mit der Platine verlötet ist.

11. Kommunikationssystem zur gleichzeitigen Übertragung von Daten und Gleichspannung, umfassend
ein Modul nach einem der vorhergehenden Ansprüche 8 bis 10,
ein Steuergerät,
ein Verbindungskabel, das ausgebildet ist, eine Steckeraufnahme (1) des Moduls und das Steuergerät elektrisch miteinander zu verbinden,
wobei das Steuergerät ausgebildet ist, durch das Verbindungskabel mit Gleichspannung versorgt zu werden und gleichzeitig über das Verbindungskabel Daten mit dem Modul auszutauschen.

12. Kraftfahrzeug mit einem Kommunikationssystem nach Anspruch 11.
